# EUROPÄISCHE PATENTSCHRIFT

(11) **EP 0 706 705 B1**
(45) Veröffentlichungstag und Bekanntmachung des Hinweises auf die Patenterteilung: **07.10.1998**
(21) Anmeldenummer: 94918716.5
(22) Anmeldetag: 05.07.1994
(51) Int. Cl.: G11B 33/04

(54) **VORRICHTUNG ZUR AUFBEWAHRUNG VON KASSETTEN**
CASE-STORAGE DEVICE
DISPOSITIF DE STOCKAGE DE BOITIERS

(30) Priorität: 02.05.1994 CH 1351/94
(43) Veröffentlichungstag der Anmeldung: 17.04.1996
(73) Patentinhaber: Reinhard, Alfred, 8800 Thalwil (CH)
(72) Erfinder: Reinhard, Alfred, 8800 Thalwil (CH)
(86) Internationale Anmeldenummer: CH9400142
(87) Internationale Veröffentlichungsnummer: WO9530224

(56) Entgegenhaltungen:
- EP-A- 0 333 271
- EP-A- 0 385 807
- EP-A- 0 415 696
- WO-A-93/22018
- US-A- 3 008 581
- US-A- 4 214 403
- US-A- 4 245 746
- US-A- 5 191 983

## Beschreibung

Die Erfindung betrifft ein Verfahren zum Herstellen eines Kassettenständers, insbesondere für CD-Kassetten, sowie das Stabelement für das Verfahren.

Kassettenständer, insbesondere für CD-Kassetten, sind in sehr unterschliedlicher Ausgestaltung bekannt, bestehen beispielsweise aus einer viele miteinander verbundene Auflageleisten umfassenden säulenartigen Konstruktion aus Metall, aus Kasten mit Schubfächern, aus Einzelaufnahmen zum Herausschwenken oder aus speziellen Profilleisten für stehende Anordnung der Kassetten. Für eine grosse Kassettenanzahl sind sie entweder sehr hoch und dann nicht besonders standfest oder als Box ein grosses Raumvolumen beanspruchend ausgebildet. Will man sie in ein Bücherregal stellen, hat man oft Platzschwierigkeiten in der Höhe oder Breite oder man muss wegen der Regalabmessungen viel Raum ungenutzt frei lassen. Aus der EP A 0385807 ist eine aus einzelnen stabförrnigen Elementen mittels Steckverbindung zusammensetzbare Vorrichtung zur Aufbewahrung von CD-Kassetten oder gleichformatigen Körpern bekannt, in die jedoch Kassetten nur hochkannt stehend hineingestellt werden können.Dabei sind zwischen den hochkant angeordneten und nur als seitliche Stütze dienenden stabförmigen Elementen eine Vielzahl von aus Stift und Buchse bestenden Steckverbindungen vorhanden, auf denen jeweils eine Kassette abgestützt ist. Um zur besseren Platzausnutzung in die Höhe zu bauen, braucht man für das Anordnen solcher Vorrichtungen etagenweise übereinander besondere, anders ausgebildete Verbindungselemente. Diese Mehrzahl von Elementen erhöht den Herstellungsaufwand und ausserdem lässt sich mit Kassetten stehend übereinander z.B. bei Anordnung dieser Vorrichtung in einem Regal nie die lichte Regalhöhe optimal ausnutzen, d.h. wenn zwei verbundene Vorrichtungen aus Stabelementen übereinander zu hoch sind, muss man bei Anordnung nur einer Vorrichtung viel Platz ungenutzt lassen.

Der Erfindung lag die Aufgabe zugrunde, das Problem der Aufbewahrung von CD-Kassetten optimal an die gegebenen Platzverhältnisse, beispielsweise in einem Regal, angepasst lösen zu können und zwar mit Hilfe einer Vielzahl zusammenzusetzender Elemente in gleicher Ausführungsform, um dabei ausserdem in einem bestimmten Raumvolumen mehr Kassetten als bei bekannten Kassettenständern möglich ist unterzubringen zu können. Ein Verfahren nach der Erfindung ist im Anspruch 1 enthalten. Stabelemente für diesen Verfahren sind in den Ansrpüchen 4-6 enthalten. Zur Lösung der Aufgabe dient ein Verfahren zum Herstellen eines Kassettenständers, insbesondere für CD-Kassetten, sowie ein Stabelement für das Verfahren, mit deren Hilfe jeder Benutzer einen Kassettenständer in jeder beliebigen Höhe oder auch Breite zur Aufbewahrung von vorzugsweise flach übereinander liegenden Kassetten selbst herstellen kann, wobei die Stabelemente zur Erweiterung eines bereits vorhandenen, aus Stabelementen bestehenden Kassettenständers in jeweils erforderlicher Anzahl nachgekauft werden können. Jede unterschiedliche Regalhöhe kann zur Unterbringung des Kassettenständers voll ausgenutzt werden und für den Zusammenbau sind keinerlei Werkzeuge notwendig. Wegen der hohen Stabilität der Einzelelemente besteht auch keine Gefahr, dass wie bei bekannten aus Kunststoffmaterial bestehenden Vorrichtungen durch Beschädigung derselben deren Funktionstüchtigkeit verloren geht.

Eine Ausführungsform der Erfindung wird nachfolgend anhand der Zeichnungen rein beispielsweise näher erläutert. Es zeigen:
Fig. 1 ein Stabelement in schaubildlicher Darstellung von oben ;
Fig. 2 das Stabelement von Fig.1 in schaubildlicher Darstellung von unten;
Fig. 3 einen Querschnitt durch das Stabelement gemäss der Linie 1-1 in Fig.1 ;
Fig. 4 einen Drehteller für ein darauf aufzubauendes Gestell aus Stabelementen;
Fig. 5 eine aus vier durch Steckverbindung zusammenfügbaren Stabelementen bestehende Etage eines auf dem Drehteller aufgebauten, nach oben zu erweiternden Gestells, in schaubildlicher Darstellung;
Fig.6 das aus Stabelementen bestehende turmförmige Gestell, in schaubildlicher Darstellung;
Fig.7 und Fig. 7a Vorderansicht und Draufsicht einer Ausführungsvariante eines Gestells in Form einer mehrmals abgewinkelten Wand aus Stabelementen;
Fig. 8 und Fig. 9 Draufsicht und Vertikalschnitt durch ein für die Errichtung einer Stabelemente-Wand nach Fig. 7 erforderliches Zwischenstück.
Fig. 10 eine abgewandelte Ausführungsform des Stabelements in schaubildlicher Darstellung von oben ;
Fig. 11 das Stabelement von Fig.10 in schaubildlicher Darstellung von unten;
Fig. 12 einen Querschnitt durch das Stabelement gemäss der Linie 3-3 in Fig.10;
Fig. 13 ausschnittweise eine Gestellecke aus Stabelementen mit Schrägschlitzen für Kassetten;
Fig. 14 eine Seitenansicht eines turmförmigen Gestells aus Stabelementen gemäss Fig. 10, mit einem Gestellfenster für aufrecht aufzubewahrende Kassetten.

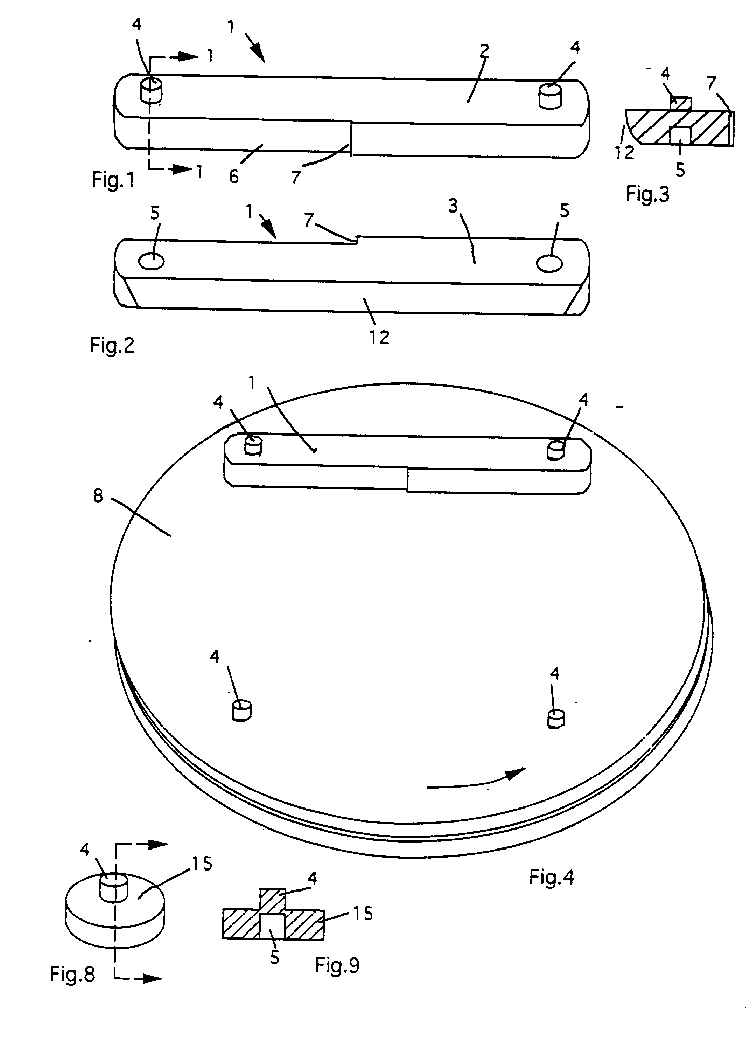

Das Stabelement 1 gemäss Fig.1 ist ein im wesentlichen quaderförmiger, länglicher Körper mit einer flachen Oberseite 2 und einer flachen Unterseite 3. In den beiden Endbereichen des Stabelements sind in der Oberseite 2 vorstehende Stifte oder Zapfen 4 und achsgleich mit diesen an der Unterseite 3 runde Bohrungen 5 ausgebildet, in die Stifte eines darunter befindlichen Stabelements mit Paßsitz eingreifen, um eine feste Steckverbindung herzustellen.

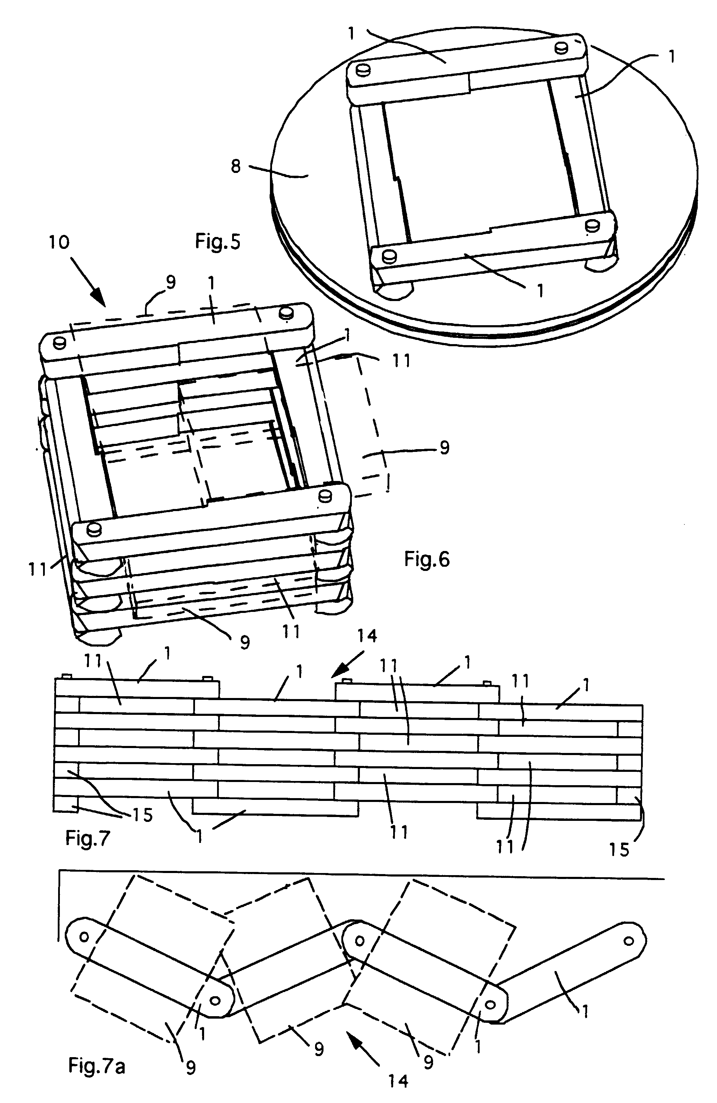

Stifte und Bohrungen entstehen gleichzeitig bei der Herstellung des Stabelements aus Kunststoffmaterial, vorzugsweise im Spritzgussverfahren. Bei der Herstellung wird ferner auch an der Innenschmalseite 6 in der Mitte eine Stufe 7 ausgebildet, die als Anschlag für die Begrenzung des Einschubwegs einer Kassette dient, von der in jeder Etage zwei von gegenüberliegenden Seiten einschiebbar sind, wie in Fig. 6 gestrichelt dargestellt ist. Aus Fig. 5 geht hervor, dass jeweils zwei identische Stabelemente 1 in rahmenförmiger Anordnung quer über zwei darunter befindliche Stabelemente 1 gelegt und mittels der Steckverbindung durch Stifte 4 und Bohrungen 5 verbunden und auf dem in Fig. 4 allein dargestellten Drehteller 8 nach dem gleichen Prinzip mittels auf diesem angeordneter Stifte 4 befestigt eine Einschubetage eines aus einer Mehrzahl gleichartiger, übereinander gesetzter Etagen bestehenden Gestells 10 bildet, welches in Fig.6 dargestellt ist. In eine derartige Etage werden von einander gegenüberliegenden Seiten zwei gestrichelt dargestellte Kassetten 9 bis zum Anschlag 7 hinein geschoben. Dabei ist die Kassette zwischen übereinander angeordneten Stabelementen 1 von aufeinander folgenden Etagen gehalten, weil die Höhe des Stabelements 1 etwas mehr als die Höhe der Kassette 9 beträgt. In der auf die erste Etage nach oben folgenden Etage werden die Kassetten aus der Richtung rechtwinklig zur Einschubrichtung in der darunter liegenden Etage eingeschoben. In einem Gestell 10 gemäss Fig.6 sind demnach zwischen je zwei übereinander angeorneten Stabelementen Einschubfächer 11 vorhanden. Aufgrund dieses Aufbaus ergibt sich, dass jedes Stabelement im turmartigen Gestell 10 mit quadratischem Grundriss eine Kassettenauflagefläche und gleichzeitig für das höhenversetzt tiefer liegende, "im rechten Winkel" benachbarte Einschubfach 11 dessen eine von zwei seitlichen Begrenzungsflächen bildet.

Um das Einschieben der Kassette zwischen zwei Stabelementen zu erleichtern und Beschädigungen zu vermeiden, ist die Aussenlängsseite 12 jedes Stabelements 1 gemäss der Querschnittdarstellung in Fig. 3 abgerundet ausgebildet, so dass die Kassette leicht in das Einschubfach 11 gelenkt wird. Da bei dem turmartigen Gestell 10 an allen vier Seiten Einschubfächer 11 vorhanden sind, ist das Gestell auf dem Drehteller 8 befestigt, so dass alle Gestellseiten bequem zugänglich sind.

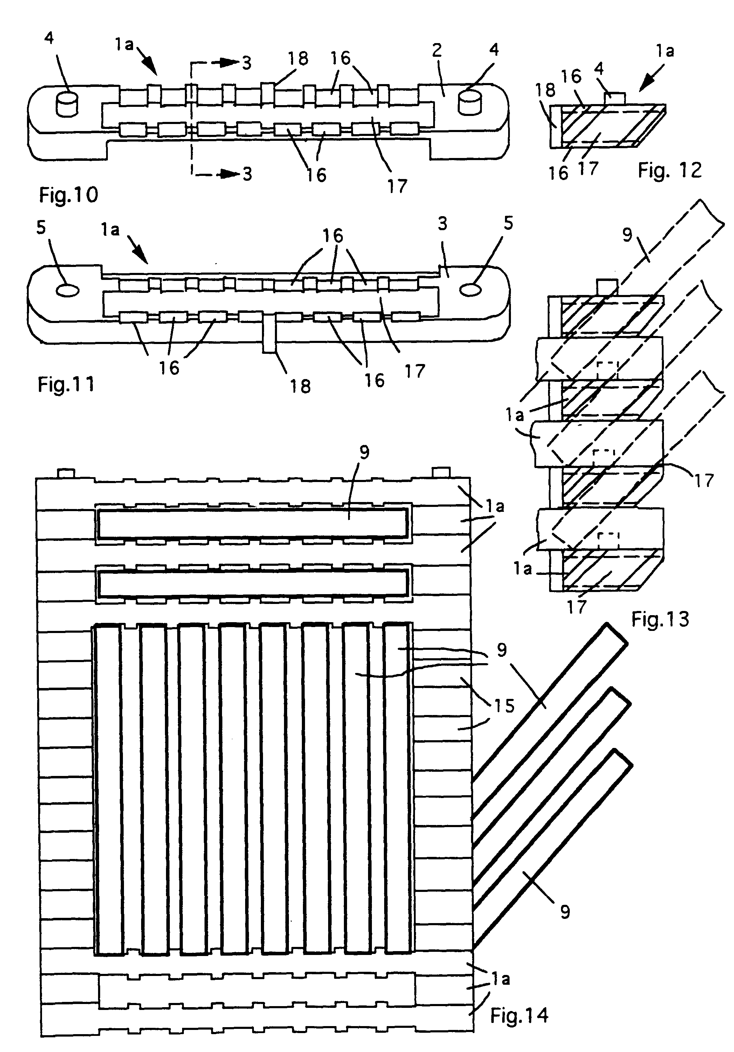

Mit den Stabelementen 1 kann ausser einem turmartigen Gestell mit quadratischem Grundriss auch ein beliebig anders geformtes, beispielsweise ein Möbel-Regalfach inder Breite ausfüllendes Gestell 14 gemäss Fig. 7 und 7a hergestellt werden, das dann allerdings nicht mehr von allen Seiten zugänglich ist. Hier bilden die übereinander gesetzten Stabelemente 1 eine an den Steckverbindungsstellen 4,5 abwechselnd gegensinnig abgewinkelte Wand, die dann eine Zickzackform hat und die beispielsweise vor einer Regalwand in einem solchen Abstand steht, dass die zwischen die Stabelemente eingeschobenen Kassetten an die Regalwand als Anschlag anstossen, um nicht nach hinten hindurchgestossen zu werden. Gehalten werden die Kassetten allein durch das untere und obere Stabelement. An den Wandenden sind die Stabelemente 1 durch zwischen je zwei Stabelemente 1 eingesetzte,Stift und Bohrung aufweisende, kurze Zwischenstücke 15 verbunden, deren Form aus Fig. 8 und 9 hervorgeht. Die Gestaltungsmöglichkeiten für ein Gestell dieser Art sind vielfältig.

Der Zusammenbau eines Gestells 10 gemäss Fig.6 geschieht mit ausschliesslich identischen Stabelemente 1, es gibt also keine rechten und linken Einzelelemente, was eine wirtschaftliche Herstellung erlaubt. Insbesondere gestattet dieses Baukastensystem, ein Gestell in jeder beliebigen Höhe und an die vorhandenen Platzverhältnisse wie beispielsweise im Regal angepasst äusserst preiswert selbst herzustellen. Auf die oberste Etage aus Stabelementen wird ein nicht dargestellter Deckel aufgesetzt, der entsprechend dem Drehteller 8 ausgebildet ist, jedoch anstelle von Stiften Bohrungen aufweist.

Eine abgewandelte Ausführungsform des Stabelements ist in Fig. 10 bis Fig. 12 dargestellt. Dieses Stabelement 1a weist einen von der Oberseite 2 zur Unterseite 3 durchgehenden und von aussen schräg abwärts, vorzugsweise unter einem Winkel von 45 ° verlaufenden Schlitz 17 mit der lichten Weite einer zur schräg stehenden Aufbewahrung in dem Schlitz bestimmten Kassette 9 auf. Die Anordnung der schrägen Kassetten geht aus Fig. 13 hervor, die ausschnittweise einen Vertikalschnitt durch eine Seite eines aus den Stabelementen 1a gebildeten turmartigen Gestells 10 zeigt. Ferner weist dieses Stabelement 1a in der Oberseite 2 und der Unterseite 3 in gleichen Abständen voneinander querverlaufende rinnenförmige Vertiefungen 16 zum getrennten Führen und seitlichen Halten von Kassetten 9 auf, die zur aufrecht stehenden Aufbewahrung zwischen zwei eine fensterartige Ausparung im Gestell 10 oben und unten begrenzenden Stabelementen 1a angeordnet werden, wie aus der Seitenansicht eines Gestells gemäss Fig. 14 hervorgeht. Die fensterartige Aussparung ensteht durch Weglassen von Stabelementen an einer Seite des Gestells, während an den dazu rechtwinkligen Gestellseiten die Stabelemente 1a durch Zwischenstücke 15 gemäss Fig. 8 und 9 verbunden werden. Figur 14 zeigt alle drei verschiedenen möglichen Aufbewahrungsarten von Kassetten in dem turmartigen Gestell. d.h. die waagerecht liegende, die aufrecht stehende und die schräge Anordnung.
Der Anschlag für die Begrenzung des Einschubwegs der waagerecht aufzubewahrenden Kassetten wird beim Stabelement 1a von einer gegenüber der Innenschmalseite 6 vorstehenden Rippe 18 gebildet.

Die aus Kunststoffmaterial bestehenden Stabelemente sind zweckmässig unterschiedlich , beispielsweise rot, gelb, blau etc. eingefärbt, sodass der Benuzter zwecks optisch schnellem Erkennen und nach Wunsch ein Gestell mit verschieden farbigen Seiten wie z.B.einer roten Seite für Kassetten mit Unterhaltungsmusk, einer grünen Seite für Kassetten mit klassischer Musik usw. errichten kann. Die Stabelemente können aber auch aus Holz oder anderem geeignetem Material bestehen. Ferner kann vorzugsweise an einer nach aussen zeigenden Seite des Stabelements ein nicht dargestellter, kleiner Leistenrahmen zur Aufnahme eines auswechselbaren Kennzeichnungsschildchens aussen am Kunststoffmaterial ausgebildet sein. Die aus Kunststoffmaterial bestehenden Stabelemente besitzen keine sonst häufig bei Kunststoffartikeln eine Verletzungsgefahr bildende scharfen Kanten, weshalb auch die Kassetten nicht zerkratzt werden können, und das Gestell hat aufgrund des Kunststoffmaterials ein geringes Gewicht.

Für in der Höhe grössere Kassetten mit zwei darin enthaltenen CD-Platten, auch als Album bezeichnet, muss das Einschubfach 11 etwas höher sein, zu welchem Zweck separate flache Zwischenscheiben, ähnlich den Zwischenstücken 15, im Bereich der Stifte 4 zwischen zwei Stabelementen 1 eingefügt werden können, was nicht dargestellt ist. Man ist also nicht auf ein Kassettenformat beschränkt. DerBegriff Kassetten gilt ganz allgemein ausser für Musikplatten z.B. auch für CD-Rom Platten.
Bei entsprechend anderer Dimensionierung der Stabelemente kann dieses Baukastensystem natürlich auch für die kleineren Tonbandkassetten wie auch für Disketten verwendet werden oder für andere quaderförmige, immer gleich grosse Körper.

## Patentansprüche

1. Verfahren zum Herstellen eines Kassettenständers, insbesondere für CD-Kassetten, dadurch gekennzeichnet, dass eine Vielzahl formidentischer, im wesentlichen quaderförmiger Stabelemente (1,1a) mit jeweils zwei zueinander parallelen ebenen Seiten und mit Stiften (4) in den beiden Endbereichen der einen Seite und mit diesen achsgleich ausgebildeten Bohrungen (5) an der anderen Seite derart im auf Lücke versetzten Mauerverbund horizontal über- und nebeneinander gesetzt und mittels der in den Endbereichen der Stabelemente vorhandenen Stifte und Bohrungen (4,5) miteinander verbunden werden, dass ein Gestell (10,14) mit von den Lücken gebildeten und zur Aufnahme je einer Kassette (9) bestimmten Einschubfächern (11) zwischen jeweils übereinnander angeordneten Stabelementen (1) entsteht.

2. Verfahren nach Anspruch 1, dadurch gekennzeichnet, dass die Stabelemente (1,1a) durch rahmenförmige Anordnung von jeweils paarweise zwei Stabelementen (1.1a) quer über zwei darunter befindlichen Stabelementen (1,1a) und in mehrlager Uebereinanderschichtung zu einem turmartigen Gestell (10) mit quadratischem Grundriss und mit an allen vier Turmseiten vorhandenen Einschubfächern (11) zusammengefügt werden, von denen einander gegenüberliegende Einschubfächer auf gleicher Höhe liegen und in Umfangsrichtung benachbarte Einschubfächer höhenversetzt sind.

3. Verfahren nach Anspruch 1, dadurch gekennzeichnet, dass die . Stabelemente (1,1a) zu einem Gestell in Form einer an den aus jeweils Stift (4) und Bohrung (5) bestehenden und als Schanierachse wirkenden Steckverbindungsstellen abgewinkelten, vorzugsweise mehrfach gegensinning abgewinkelten, zickzacklinienförmgen Wand (14) zusammengefügt werden, wobei die Stabelemente an den Gestellwandenden durch zwischen je zwei Stabelemente eingesetzte und Steckverbindungsmittel (4,5) aufweisende kurze Zwischenstücke (15) verbunden werden.

4. Stabelement für das Verfahren nach einem der Ansprüche 1 bis 3, zum Herstellen eines Kassettenständers, dadurch gekennzeichnet, dass ein im wesentlichen quaderförmiger Körper (1,1a) mit zwei zueinander parallelen flachen Seiten und mit in den Endbereichen dieser Seiten mittig angeordnetenStiften (4) an der einen und mit den Stiften jeweils achsgleichen Bohrungen (5) an der anderen Seite einen zwischen den die Stifte bzw. Bohrungen aufweisenden, beiden flachen Endbereichen sich erstreckenden, von der Oberseite (2) zur Unterseite (3) durchgehenden und von aussen schräg abwärts, vorzugsweise unter einem Winkel von 45°, verlaufenden Schlitz (17) aufweist, der bei einem aus Stabelementen gebildeten Gestell neben den in dem Gestell horizontal sich erstreckenden Lücken im Mauerverbund ein zur wahlweisen Benutzung bestimmtes Einschubfach (11) für die Aufnahme einer Kassette (9) bildet.

5. Stabelement für das Verfahren nach einem der Ansprüche 1 bis 3, dadurch gekennzeichnet, dass es in der Oberseite (2) und der Unterseite (3) in gleichen Abständen voneinander querverlaufende rinnenförmige Vertiefungen (16) aufweist, die beim Zusammenfügen einer Vielzahl von Stabelementen zu einem Gestell zum getrennten Führen und seitlichen Halten von zur aufrecht stehenden Aufbewahrung zwischen zwei eine fensterartige Ausparung im Gestell (10) begrenzenden Stabelementen (1a) bestimmten Kassetten (9) dienen.

6. Stabelement für das Verfahren nach einem der Ansprüche 1 bis 3, dadurch gekennzeichnet, dass es in der Längsmitte der einen Längsseite (6) einen Anschlag (7,18) aufweist, der bei einem durch Zusammenfügen einer Mehrzahl von Stabelementen (1,1a) gebildeten Gestell (10,14) mit zueinander rechtwinkligen Getellseiten eine Begrenzung des Kassetten-Einschubwegs bildet, und dass der Anschlag von einer Stufe (7) in der Innenschmalseite (6) des Stabelements (1) oder von einer gegenüber der geraden Innenschmalseite (6) des Stabelements (1a) vorstehenden Rippe (18) gebildet ist.

## Claims

1. Method for the manufacture of a storage rack for cassettes, specifically for CD-cassettes, characterized in that a plurality of shape-identical and substantially sqare-shaped bar elements (1,1a) each having two parallel planar sides (2,3) and pins (4) in the end areas of one side and bores (5) in the end areas of the oppositely located planar side are placed horizontally over and aside of each other with their end areas set as a wall assembly having gaps and are interconnected by means of respective plug-in connecting means (4,5) placed in the respective end areas of the bar elements in such a manner that a frame (10,14)is formed with slide-in compartments (11) formed by said gaps for one cassette each between two respective bar elements placed above each other.

2. Method according to claim 1, characterized in that the bar elements are combined by frame-like arangement of respective pairwise two bar elements transversely over two bar elements located below and in a multi-layer arrangement in layers in order to form a tower-like rack having a square base and with slide-in compartments at all four sides of the tower,of which oppositely located slide-in compartments are located at the same hight and slide-in compartments lying in the direction of the circumference next to each other are staggered in hight.

3. Method according to claim 1, characterized in that the bar elements are combined to form a rack in the form of a zig-zag line like wall angled preferably several times in an oppsite sense and at the locations of the plug-in connections,whereby the bar elements are interconnected at the ends of the rack walls by short connecting pieces set inbetween two respective bar elements and having plug-in connecting means.

4. Bar element for the method according to one of the claims 1 to 3 for the manufacture of a storage rack, characterized in that a substantially square body (1,1a) having two planar sides parallel to each other and at both its end areas pins (4) at the one and bores (5) respective axially aligned with the pins at the other side comprises a slot (17) extending between the end areas with the pins and bores and extending continuously obliquely downards,preferbly at an angle of 45° from the outer upper side(2)towards the lower side(3),which slot forms a selective usable slide-in compartment (11) apart from the horizontally extending gaps in the wall assembly of a storage rack formed of a plurality of bar elements.

5. Bar element for the method according to one of the claims 1 to 3,characterized in that it comprises in the upper side (2) and the lower side (3) groove shaped recesses (16) extending transversely at equal distances for a separate guiding and lateral supporting of cassettes intending for an upright standing storage between two bar elements (la) defining a window like recess in the frame (10).

6. Bar element for the method according to one of the claims 1 to 3,characterized in that it comprises at the longitudinal center of its inner longitudinal side (6) an abutment (7,18), which forms a limit of the slide-in path of the cassettes in a storage rack (10,14) having rectangular sides and being formed by connecting of a plurality of bar elements (1,1a), said abutment being formed by a step (7) in the inner narrow side (6) of the bar element (1) or by a rib (18) projecting from the planar inner narrow side (6) of the bar element (1a).

## Revendications

1. Procédé de réalisation d'un porte-cassettes, en particulier pour des cassettes à disques compacts, caractérisé par le fait que l'on pose une pluralité d'éléments en barre (1, 1a) de formes identiques et sensiblement en forme de parallélépipède, qui présentent chacun deux côtés plats mutuellement parallèles, des tiges (4) dans les deux zones d'extrémité de l'un des côtés et des perçages (5) réalisés de façon coaxiale auxdites tiges de l'autre côté, lesdits éléments en barre étant disposés horizontalement au-dessus et à côté des autres selon une combinaison murale en décalage au-dessus de vides, et étant reliés les uns aux autres aux moyens des tiges et des perçages (4, 5) prévus dans les zones d'extrémité des éléments en barre, de sorte qu'il en résulte un bâti (10, 14) avec des étagères d'introduction (11) formées par les vides et destinées à recevoir chacune une cassette (9), entre des éléments en barre (1) agencés respectivement les uns au-dessus des autres.

2. Procédé selon la revendication 1, caractérisé en ce que les éléments en barre (1, 1a) sont assemblés en agençant à la manière d'un cadre respectivement des paires de deux éléments (1, 1a) transversalement au-dessus de deux éléments situés au-dessous (1, 1a), suivant une disposition superposée à plusieurs couches pour former un bâti (10) à contour carré, analogue à une tour, avec des étagères d'introduction (11) prévues sur les quatre côtés de la tour, parmi lesquelles des étagères d'introduction mutuellement opposées sont situées à la même hauteur et des étagères d'introduction voisines selon la périphérie sont décalées en hauteur.

3. Procédé selon la revendication 1, caractérisé en ce que les éléments en barre (1, 1a) sont assemblés en un bâti sous la forme d'une paroi (14) qui suit une ligne en zigzag, coudée, et de préférence coudée plusieurs fois en sens opposés, au niveau des emplacements de liaison constitués respectivement par une tige (4) et un perçage (5) faisant office d'axes de charnière, les éléments en barre étant reliés aux extrémités des parois du bâti à l'aide de courtes pièces intermédiaires (15), introduites entre deux éléments respectifs et présentant des organes de liaison à enfichage (4, 5).

4. Élément en barre pour la mise en oeuvre du procédé selon l'une des revendications 1 à 3, pour réaliser un porte-cassettes, caractérisé en ce qu'un corps (1, 1a), de forme sensiblement parallélépipédique, avec deux côtés plats mutuellement parallèles, présentant des tiges (4) agencées à l'un des côtés, au milieu des zones d'extrémité de ces côtés et de l'autre côté, des perçages (5), respectivement coaxiaux avec les tiges, comporte une fente (17) qui traverse depuis la face supérieure (2) jusqu'à la face inférieure (3) et s'étend depuis l'extérieur en descendant en oblique et de préférence sous un angle de 45°, cette fente s'étendant entre les deux zones terminales planes présentant les tiges ou les perçages de sorte que, dans un bâti formé par les éléments en barre, ladite fente forme, en plus des vides qui s'étendent horizontalement dans la composition murale du bâti, une étagère d'introduction (11), destinée au choix à une utilisation pour recevoir une cassette (9).

5. Élément en barre pour la mise en oeuvre du procédé selon l'une des revendications 1 à 3, caractérisé en ce qu'il comporte, dans la face supérieure (2) et dans la face inférieure (3), des renfoncements (16) en forme de goulottes, qui s'étendent transversalement les uns par rapport aux autres à des distances égales et qui, lors de l'assemblage d'une multiplicité d'éléments en barre pour former un bâti, servent à guider séparément et à retenir latéralement des cassettes (9), destinées à être logées debout entre deux éléments en barre (1a) qui délimitent un évidement en forme de fenêtre dans le bâti (10).

6. Élément en barre pour la mise en oeuvre du procédé selon l'une des revendications 1 à 3, caractérisé en ce qu'il comporte, au milieu de sa longueur sur l'un de ses longs côtés (6) une butée (7, 18) qui, dans un bâti (10, 14) formé par assemblage d'une pluralité d'éléments en barre (1, 1a) de sorte que les côtés du bâti soient perpendiculaires et forment une limitation du trajet d'introduction de cassette, et en ce que la butée est formée par un gradin (7) dans le côté intérieur étroit (6) de l'élément en barre (1), ou par une nervure (18) qui dépasse du côté intérieur étroit rectiligne (6) de cet élément en barre (1a).
